# EUROPEAN PATENT SPECIFICATION

(11) **EP 4 282 789 B1**
(45) Date of publication and mention of the grant of the patent: **26.02.2025**
(21) Application number: 22461554.2
(22) Date of filing: 25.05.2022
(51) Int. Cl.: B65G 1/137, B65G 47/48, B65G 47/52

(54) **A TRANSPORTING SYSTEM FOR FEEDING ITEMS INTO CONTAINERS**
TRANSPORTSYSTEM ZUM ZUFÜHREN VON GEGENSTÄNDEN IN BEHÄLTER
SYSTÈME DE TRANSPORT POUR DÉPOSER DES ARTICLES DANS DES CONTENEURS

(43) Date of publication of application: 29.11.2023
(73) Proprietor: Sutowski, Krzysztof, 89-600 Chojnice (PL)
(72) Inventor: SUTOWSKI, Krzysztof, 89-600 Chojnice (PL); PIATKOWSKI, Tomasz, 85-001 Bydgoszcz (PL)
(74) Representative: Kancelaria Eupatent.pl Sp. z.o.o

(56) References cited:
- PL-B1- 237 294

## Description

### TECHNICAL FIELD

The present invention relates to a transporting system for feeding items.

### BACKGROUND

There are known different types of transporting systems utilizing carousel-type conveyors in which particular elements or items are circulated in a loop, for example in a loop between multiple processing or collecting stations.

A Polish patent PL237294B1 discloses a transporting system according to the preamble of claim 1. It comprises a carousel conveyor with a plurality of containers and a buffer conveyor for feeding items to the containers. The buffer conveyor is able to drop items only to a single position at the carousel conveyor. Therefore, such system is not effective, because it may require an almost full revolution of the carousel before an item can be dropped to a particular container on the carousel.

### SUMMARY OF THE INVENTION

There is a need to provide a transporting system with improved sorting efficiency.

The object of the invention is a transporting system for feeding items into containers. The system comprises a carousel conveyor with a plurality of containers located on the carousel conveyor. The carousel conveyor comprises: a first longitudinal conveyor; a second longitudinal conveyor parallel to the first longitudinal conveyor; and transversal conveyors arranged at the ends of the longitudinal conveyors configured to move the containers between the longitudinal conveyors. A buffer conveyor for feeding items to the containers is located on the carousel conveyor, wherein the buffer conveyor is arranged above one of the longitudinal conveyors and comprises at least two transporting modules arranged in a series and configured to transfer items along a first axis which is parallel to the longitudinal conveyors and along a second axis which is perpendicular to the first axis. A curved outlet conveyor is provided for discharging the containers from the carousel conveyor.

Preferably, the transversal conveyors are configured to lift the containers above the longitudinal conveyors in order to transfer the containers transversally onto a neighbouring longitudinal conveyor.

The carousel conveyor comprises at least 10 containers.

The invention also relates to a sorting system comprising at least one transporting system according to any of previous claims and further comprising: an items supply line connected to the buffer conveyor by means of an inlet; a receiving line connected to the curved outlet conveyor for receiving containers from the carousel conveyor; and an empty containers supply line connected to the carousel conveyor for supplying empty containers to the carousel conveyor.

An essential advantage of the transporting system according to the invention is that the buffer conveyor offers possibility to select the position at which the item can be dispatched from the buffer conveyor to the dedicated container. This may significantly increase the sorting time, as the buffer does not need to delay dispatching an item to the container on the carousel as in the prior art solutions. Moreover, various other constructional features increase the timing efficiency of sorting.

These and other features, aspects and advantages of the invention will become better understood with reference to the following drawings, descriptions and claims.

### BRIEF DESCRIPTION OF DRAWINGS

The present invention is shown by means of preferable embodiments in a drawing, wherein:

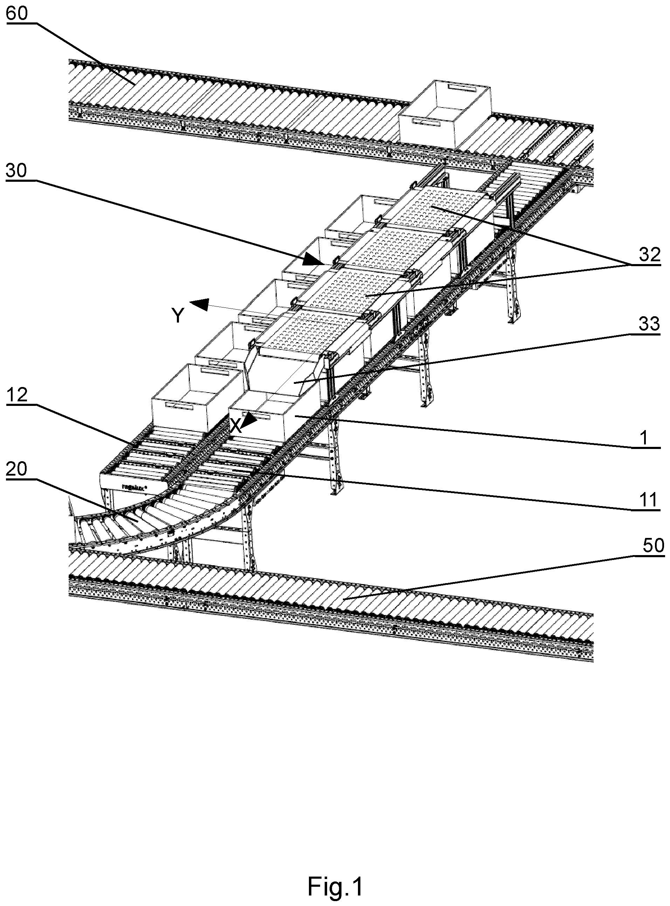

Fig. 1 presents a transporting system in an isometric view;

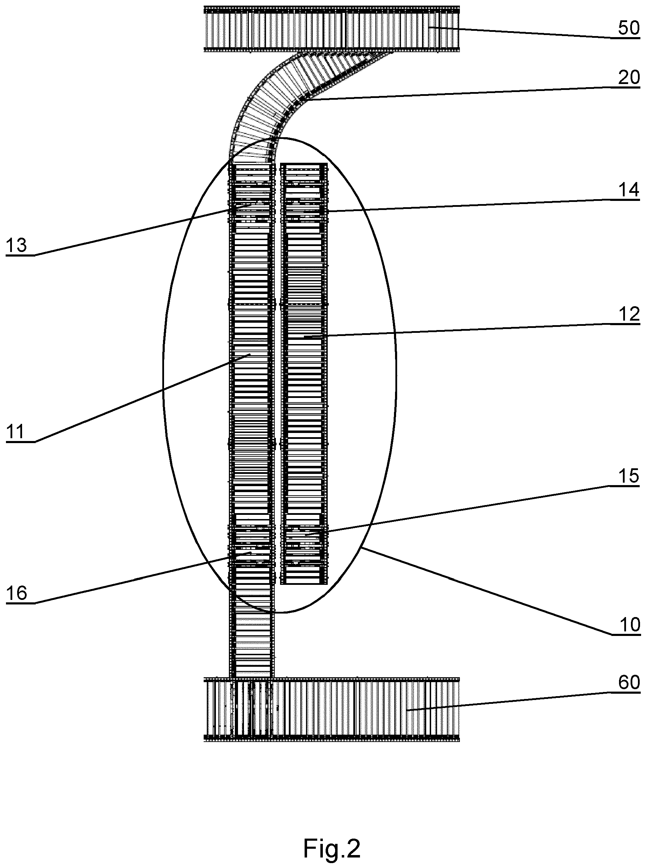

Fig. 2 presents the carousel conveyor in a top view;

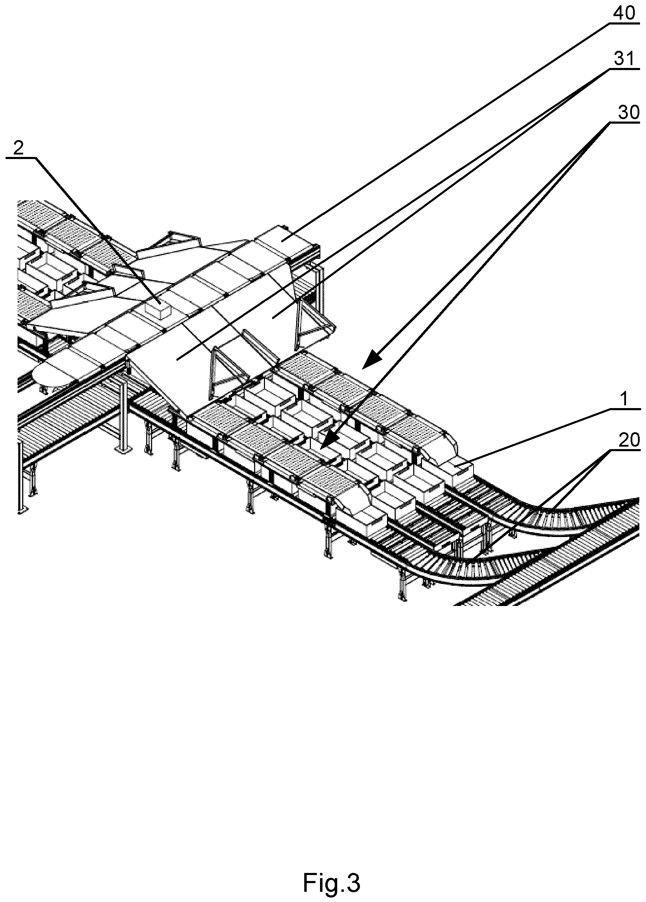

Fig. 3 presents transporting system with items supply line;

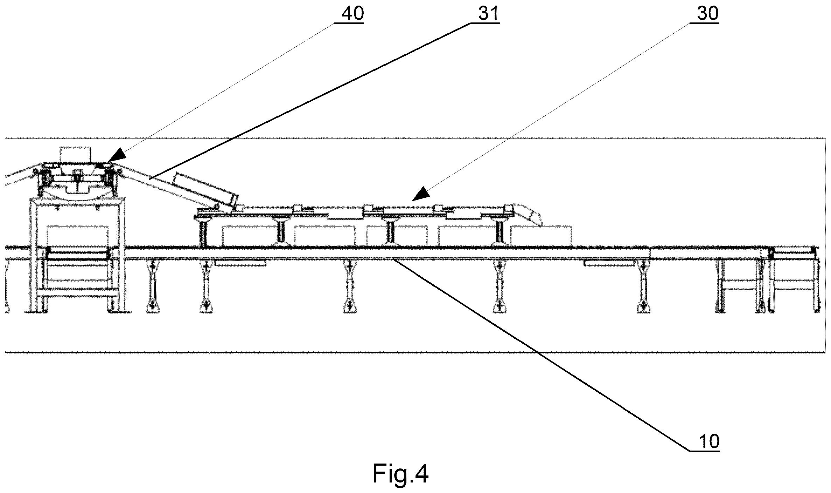

Fig. 4 presents a transporting system in a side view;

### DETAILED DESCRIPTION

The following detailed description is of the best currently contemplated modes of carrying out the invention. The description is not to be taken in a limiting sense but is made merely for the purpose of illustrating the general principles of the invention.

The transporting system as shown comprises a carousel conveyor 10, on which a plurality of containers are located. The carousel is formed by a first longitudinal conveyor 11 and a second longitudinal conveyor 12 parallel to the first longitudinal conveyor 11, as well as four transversal conveyors 13, 14, 15, 16 arranged at the ends of the longitudinal conveyors 11, 12. The transversal conveyors 13, 14, 15, 16 are configured to move the containers 1 between the longitudinal conveyors 11, 12 so that they can travel in a carousel-like manner. The transversal conveyors 13, 14, 15, 16 are configured to lift the containers 1 above the longitudinal conveyors 11, 12 in order to transfer the containers transversally onto a neighbouring longitudinal conveyor 11, 12.

A buffer conveyor 30 is arranged above one of the longitudinal conveyors 11, 12 to feed items 2 to the containers 1 located on the carousel conveyor 10. The buffer conveyor 30 comprises at least two transporting modules 32 arranged in a series and configured to transfer items 2 along a first axis X which is parallel to the longitudinal conveyors 11, 12 and along a second axis Y which is perpendicular to the first axis X. A slide 33 can be located next to the transporting module 32 so as to facilitate transfer of the item 2 to the container 1 (so as to limit the height from which the item falls to the container 1) - in the present example only one slide 33 is shown for clarity of the drawing.

A curved outlet conveyor 20 is used for discharging the containers 1 from the carousel conveyor 10.

An items supply line 40 is connected to the buffer conveyor 30 by means of an inlet 31. A receiving line 50 is connected to the curved outlet conveyor 20 for receiving containers 1 from the carousel conveyor 10. An empty containers supply line 60 is connected to the carousel conveyor 10 for supplying empty containers 1 to the carousel conveyor 10.

The carousel conveyor 10 is configured follows. The first longitudinal conveyor 11 is configured to transfer the containers 1 in a first direction and the second longitudinal conveyor 12 is configured to transfer the containers 1 in a second direction opposite to the first direction. The first transversal conveyor 13 and the second transversal conveyor 14 are configured to transfer the containers 1 from the first longitudinal conveyor 11 to the second longitudinal conveyor 12, wherein the third transversal conveyor 15 and the fourth transversal conveyor 16 are configured to transfer the containers 1 from the second longitudinal conveyor 12 to the first longitudinal conveyor 11.

Each container 1 is to be filled with at least one item 2. For example, each container may be assigned to an order of particular items. The transporting system feeds the items one by one to dedicated containers until the particular container is filled with all desired items - then, that container can leave the carousel conveyor towards the curved outlet conveyor 20 that allows to discharge the containers to further transportation conveyors. The curvature of the outlet conveyor 20 allows to discharge containers to the transportation conveyor with a higher speed as compared to conventional conveyors attached perpendicularly, which further increases the operational speed of the system.

The transversal conveyors 13, 14, 15, 16 may have a form of narrow belt conveyors wherein the transmission belts of the conveyors are arranged between the rollers of the longitudinal conveyors 11, 12. Hence when the transversal conveyors 13, 14, 15, 16 are in a lower position they do not interact with the containers 1 (the containers 1 are moved by the rollers of the longitudinal conveyors 11, 12) and in an upper position the transversal conveyors 13, 14, 15, 16 lift the containers above the rollers of the longitudinal conveyors 11, 12 (then the containers 1 are moved by the belts of the transversal conveyors 13, 14, 15, 16).

The movement of the containers 1 on the carousel conveyor 10 may be also performed in directions opposite to the ones described above. The resulting direction of transferring the containers 1 on the carousel conveyor 10, depends on the actual position of the particular container on the carousel conveyor 10 with respect to the actual position of the particular item (dedicated for this particular container) on the buffer conveyor 30 - the item 2 which is to be feed to the particular container 1. The direction is selected such that the distance of movement of the container 1 to the point at which the item 2 is to be received (i.e., fed from the buffer conveyor into the container) is the shortest. This allows to save time needed for the particular container to be moved along the whole circle on the carousel conveyor.

The longitudinal conveyors 11, 12 may have a form of a roller conveyors or belt conveyors.

The transporting modules 32 are configured to transfer the items 2 along the first axis X and alternatively along the second axis Y, therefore the items 2 located on the buffer conveyor 10 may be fed to the container 1 located on the carousel conveyor 10 at an end of the buffer conveyor 30 or may be fed to the container 1 located on the carousel conveyor 10 at a side of the buffer conveyor 30 (the expression "at a side" means that for example the container 1 is located on the second longitudinal conveyor 12 while the buffer conveyor 30 is located above the first longitudinal conveyor 11). Therefore, the buffer conveyor 30 offers possibility to select the position at which the item 2 can be dispatched from the buffer conveyor to the dedicated container 1. The items 2 may be transferred from the first transporting module to the next transporting module 32 until the end of the buffer conveyor 30 and may be transferred from each transporting module.

The transporting modules 32 may have a form of ball roller tables with active transferring means (i.e., being driven to move the items) configured to automatically transfer the items either in X direction or in Y direction, by actuating the respective transferring means. The transferring means may have a form of mutually perpendicular belt conveying means.

The carousel conveyor 10 may comprise for example 10 or more containers 1. The amount of the containers 1 on the carousel conveyor 10 depends on the length of the longitudinal conveyors 11, 12. However the containers 1 should fit on the longitudinal conveyors 11, 12 such that the space where the transversal conveyors 13, 14, 15, 16 are located is free. This allows for more efficient transmission of the containers 1 between the longitudinal conveyors 11, 12.

A plurality of transporting systems as described above may form a sorting system. In that case, the items supply line 40 distributes the items 2 which may be put on the supply line manually or automatically for example by means of a robot arm, to the one or more buffer conveyors 30. The items 2 are transferred from the items supply line 40 to the buffer conveyor 30 by means of an inlet 31, which for example may have a form of a chute (i.e., an inclined flat plate) or belt transmission line. The receiving line 50 receives the containers 1 having a completed order of items from the carousel conveyor 20 and transfers them to a reception point. The receiving line 50 and the empty containers supply line 60 may have a form of roller conveyors or belt conveyors or any other which are suitable for transferring containers or boxes or packs etc.

The sorting system may further comprise a vision system for identifying the items 2 and the containers 1. In such case each item 2 and each container 1 is equipped with an identification code such as a bar code or a QR code etc.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A transporting system for feeding items (2) into containers, the system comprising:
- a carousel conveyor (10);
- a plurality of containers (1) located on the carousel conveyor (10);
- wherein the carousel conveyor (10) comprises:
- a first longitudinal conveyor (11);
- a second longitudinal conveyor (12) parallel to the first longitudinal conveyor (11); and
- transversal conveyors (13, 14, 15, 16) arranged at the ends of the longitudinal conveyors (11, 12) configured to move the containers (1) between the longitudinal conveyors (11, 12);
- a buffer conveyor (30) for feeding items (2) to the containers (1) located on the carousel conveyor (10), wherein the buffer conveyor (30) is arranged above one of the longitudinal conveyors (11, 12) and comprises at least two transporting modules (32) arranged in a series and configured to transfer items (2) along a first axis (X) which is parallel to the longitudinal conveyors (11, 12),
**characterized in that** the at least two transporting modules (32) are also configured to transfer items (2) along a second axis (Y) which is perpendicular to the first axis (X) and **in that** the system furthermore comprises a curved outlet conveyor (20) for discharging the containers (1) from the carousel conveyor (10).

2. The transporting system according to claim 1 wherein the transversal conveyors (13, 14, 15, 16) are configured to lift the containers (1) above the longitudinal conveyors (11, 12) in order to transfer the containers transversally onto a neighbouring longitudinal conveyor (11, 12).

3. The transporting system according to claim 1 or 2 wherein the carousel conveyor (10) comprises at least 10 containers (1).

4. A sorting system comprising at least one transporting system according to any of previous claims and further comprising:
- an items supply line (40) connected to the buffer conveyor (30) by means of an inlet (31);
- a receiving line (50) connected to the curved outlet conveyor (20) for receiving containers (1) from the carousel conveyor (10);
- an empty containers supply line (60) connected to the carousel conveyor (10) for supplying empty containers (1) to the carousel conveyor (10).

## Patentansprüche

1. Transportsystem zum Zuführen von Gegenständen (2) in Behälter, wobei das System Folgendes umfasst:
- einen Karussellförderer (10);
- eine Vielzahl von Behältern (1), die sich auf dem Karussellförderer (10) befindet;
- wobei der Karussellförderer (10) Folgendes umfasst:
- einen ersten Längsförderer (11);
- einen zweiten Längsförderer (12), der parallel zu dem ersten Längsförderer (11) ist; und
- Querförderer (13, 14, 15, 16), die an den Enden der Längsförderer (11, 12) angeordnet und dazu konfiguriert sind, die Behälter (1) zwischen den Längsförderern (11, 12) zu bewegen;
- einen Pufferförderer (30) zum Zuführen von Gegenständen (2) in die Behälter (1), die sich auf dem Karussellförderer (10) befinden, wobei der Pufferförderer (30) über einem der Längsförderer (11, 12) angeordnet ist und mindestens zwei Transportmodule (32) umfasst, die in einer Reihe angeordnet und dazu konfiguriert sind, Gegenstände (2) entlang einer ersten Achse (X) zu verlagern, die parallel zu den Längsförderern (11, 12) ist,
**dadurch gekennzeichnet, dass** die mindestens zwei Transportmodule (32) zudem dazu konfiguriert sind, Gegenstände (2) entlang einer zweiten Achse (Y) zu verlagern, die senkrecht zu der ersten Achse (X) ist, und dass das System außerdem einen gekrümmten Auslaufförderer (20) zum Entladen der Behälter (1) von dem Karussellförderer (10) umfasst.

2. Transportsystem nach Anspruch 1, wobei die Querförderer (13, 14, 15, 16) dazu konfiguriert sind, die Behälter (1) über die Längsförderer (11, 12) zu heben, um die Behälter quer auf einen benachbarten Längsförderer (11, 12) zu verlagern.

3. Transportsystem nach Anspruch 1 oder 2, wobei der Karussellförderer (10) mindestens 10 Behälter (1) umfasst.

4. Sortiersystem, umfassend mindestens ein Transportsystem nach einem der vorhergehenden Ansprüche und ferner umfassend:
- eine Gegenstandsversorgungslinie (40), die mittels eines Einlasses (31) mit dem Pufferförderer (30) verbunden ist;
- eine Aufnahmelinie (50), die mit dem gekrümmten Auslaufförderer (20) verbunden ist, zum Aufnehmen von Behältern (1) von dem Karussellförderer (10);
- eine Leerbehälterversorgungslinie (60), die mit dem Karussellförderer (10) verbunden ist, zum Versorgen des Karussellförderers (10) mit Leerbehältern (1).

## Revendications

1. Système de transport pour déposer des articles (2) dans des conteneurs, le système comprenant :
- un convoyeur à carrousel (10) ;
- une pluralité de conteneurs (1) situés sur le convoyeur à carrousel (10) ;
- dans lequel le convoyeur à carrousel (10) comprend :
- un premier convoyeur longitudinal (11) ;
- un second convoyeur longitudinal (12) parallèle au premier convoyeur longitudinal (11) ; et
- des convoyeurs transversaux (13, 14, 15, 16) disposés aux extrémités des convoyeurs longitudinaux (11, 12) configurés pour déplacer les conteneurs (1) entre les convoyeurs longitudinaux (11, 12) ;
- un convoyeur tampon (30) pour déposer des articles (2) dans les conteneurs (1) situés sur le convoyeur à carrousel (10), dans lequel le convoyeur tampon (30) est agencé au-dessus de l'un des convoyeurs longitudinaux (11, 12) et comprend au moins deux modules de transport (32) agencés en série et configurés pour transférer des articles (2) le long d'un premier axe (X) qui est parallèle aux convoyeurs longitudinaux (11, 12), **caractérisé en ce que** les au moins deux modules de transport (32) sont également configurés pour transférer des articles (2) le long d'un second axe (Y) qui est perpendiculaire au premier axe (X) et **en ce que** le système comprend en outre un convoyeur de sortie incurvé (20) pour décharger les conteneurs (1) du convoyeur à carrousel (10).

2. Système de transport selon la revendication 1, dans lequel les convoyeurs transversaux (13, 14, 15, 16) sont configurés pour soulever les conteneurs (1) au-dessus des convoyeurs longitudinaux (11, 12) afin de transférer les conteneurs transversalement sur un convoyeur longitudinal voisin (11, 12).

3. Système de transport selon la revendication 1 ou 2, dans lequel le convoyeur à carrousel (10) comprend au moins 10 conteneurs (1).

4. Système de tri comprenant au moins un système de transport selon l'une quelconque des revendications précédentes et comprenant en outre :
- une ligne d'alimentation en articles (40) reliée au convoyeur tampon (30) au moyen d'une entrée (31) ;
- une ligne de réception (50) reliée au convoyeur de sortie incurvé (20) pour recevoir les conteneurs (1) du convoyeur à carrousel (10) ;
- une ligne d'alimentation en conteneurs vides (60) reliée au convoyeur à carrousel (10) pour alimenter en conteneurs vides (1) le convoyeur à carrousel (10).
